Europäisches Patentamt

European Patent Office

Office européen des brevets

(19)

(11) Publication number: **0 299 647**
**A1**

# EUROPEAN PATENT APPLICATION

(21) Application number: **88305932.1**

(51) Int. Cl.⁴: **G02F 1/37**

(22) Date of filing: **27.06.88**

(30) Priority: **30.06.87 GB 8715361**

(43) Date of publication of application:
**18.01.89 Bulletin 89/03**

(84) Designated Contracting States:
**AT BE CH DE ES FR GB GR IT LI LU NL SE**

(71) Applicant: **BRITISH TELECOMMUNICATIONS public limited company**
**81 Newgate Street**
**London EC1A 7AJ(GB)**

(72) Inventor: **White, Kenneth Ian**
**118 Constable Road**
**Ipswich Suffolk IP4 2XA(GB)**

(74) Representative: **Greenwood, John David et al**
**British Telecom Intellectual Property Unit**
**151 Gower Street**
**London WC1E 6BA(GB)**

(54) **Optical second harmonic generation.**

(57) Most semiconductor lasers and LEDs emit light in the red and near-IR regions. However many applications require light at wavelengths extending into the blue and near-UV. One method of providing light at these wavelengths is to use the process of second harmonic generation in non-linear optical materials. Such as optical second harmonic generator arranged to couple light from a fundamental guided mode into a second harmonic radiation mode has an overlap parameter $I_N$ greater than 0.1

The overlap parameter $I_N$ is related to the measured efficiency $\eta$ of the second harmonic generation by the equation:

$$\eta = \frac{P^{(2\omega)}(L)}{P^{(\omega)}(0)} = \eta_m \times \left[\frac{\eta_e L}{\lambda(\omega)}\right] \times I_N^2$$

where $\eta_m$ is the efficiency characteristic of the non-linear material (formally defined in the detailed theoretical discussion below), $n_e$ is the effective refractive index of the device for the modes coupled, L is the length of the device, $P^{2\omega}(L)$ the output power for a device of length L and $P^\omega(0)$ the initial pump power at the fundamental frequency.

*Fig. 1.*

EP 0 299 647 A1

## Optical Second Harmonic Generation

Most semiconductor lasers and LEDs emit light in the red and near-IR regions. While light of these wavelengths may be useful for some purposes there are many applications, including displays, spectroscopic sources, and laser printers/reprographics for which light at wavelengths extending into the blue and near-UV is required. One method of providing light at these wavelengths is to use the process of second harmonic generation in non-linear optical materials to effectively double the frequency of light from conventional semiconductor sources.

It is well known that non-linear materials generate harmonics when excited at a fundamental frequency and that in particular a second harmonic generation (SHG) occurs in non-centrosymmetric materials. However high intensities are required to initiate the non-linear optical processes and since the power available from semiconductor diode lasers and like devices is relatively low it is important to maximise the efficiency of the structure and materials of any second harmonic generator to be used with such sources. To this end it is advantageous to use waveguide structures since the tight lateral field confinement in such structures converts low powers into high intensities and long interaction lengths are possible. To use of organic materials offers further gains in efficiency since some such materials have non-linearities two orders of magnitude greater than the inorganic materials well known in bulk non-linear optics. A typical device combining organic non-linear materials and a waveguide structure is the crystal cored fibre waveguide: a single crystal of a material such as benzil grown in the micron-sized bore of a glass capillary.

The design of structures of this type in which both the fundamental and the second harmonic modes are guided has been discussed for both second harmonic generation and optical parametric amplification in the paper by K.I. White and B.K. Nayar published as paper WK46 of the Proceedings of the conference on lasers and electro-optics (CLEO 86), San Francisco, 1986. While these devices are theoretically capable of offering high efficiency they are found to demand tight fabrication tolerance in order to satisfy phase matching requirements. A relaxation of the tight fabrication tolerances and consequent advantages in terms of cost of manufacture may be achieved by generating the second harmonic in radiation modes. The second harmonic is trapped in the cladding of the waveguide by total internal reflection and emerges from the fibre end as if from a "blue LED". The beam profile is that of a hollow cone. An attraction of this device is that non-linear materials which absorb at the second harmonic wavelength may still be useful since the second harmonic mode travels mainly in the clad glass. However past attempts to produce such a device suitable for practical applications have failed through an inability to obtain sufficient efficiency.

According to this invention an optical second harmonic generator arranged to couple light from a fundamental guided mode into a second harmonic radiation mode has an overlap parameter $I_N$ greater than 0.1 .

The overlap parameter $I_N$ is related to the measured efficiency $\eta$ of the second harmonic generation by the equation:

$$\eta = \frac{P^{(2\omega)}(L)}{P^{(\omega)}(0)} = \eta_m \times \left[\frac{\eta_e L}{\lambda(\omega)}\right] \times I_N^2$$

where $\eta_m$ is the efficiency characteristic of the non-linear material (formally defined in the detailed theoretical discussion below), $n_e$ is the effective refractive index of the device for the modes coupled, L is the length of the device $P^{2\omega}(L)$ the output for a device of length L and $P^{\omega}(0)$ the initial pump power at the fundamental frequency.

Preferably the overlap parameter $I_N$ is greater than 0.3 and it is further preferred that it is greater than 1. It is still further preferred that $I_N$ is greater than 3.

Because of the complexity of the process of second harmonic generation in the radiation mode, the large number of design parameters to be chosen in constructing a device, and the complexity of the dependence of the efficiency of the device upon those design parameters past attempts to improve the efficiency of such second harmonic generators through routine experimentation and trial and error have failed. However a novel analysis by the inventor has established a relationship between the overlap parameter $I_N$ and just three other independent parameters. Knowledge of this relationship makes possible the design of a device of markedly improved efficiency. The present invention therefore offers the possibility of practical second harmonic generators for industrial applications with neither the low efficiencies or tight fabrication tolerances which render known devices impractical.

A device in accordance with the present invention and a theoretical analysis of the design parameters determining the performance of such a device are now discussed in detail with reference to the accompanying drawings, in which:-

Figure 1 is a side elevation of a device in accordance with the present invention;

Figure 2 is a graph illustrating the refractive index profile of a device in accordance with the present invention; and

Figures 3 to 9 are graphs illustrating the interrelationship of the design parameters of a device in accordance with the present invention and the overlap parameter $I_N$.

An optical second harmonic generator comprises a cylindrical core 1 of non-linear organic crystalline material surrounded by a glass clad 2. Light at a frequency $\omega$ is input to the generator from a semiconductor diode laser (not shown) aligned with the core 1. Light at the frequency of the second harmonic $2\omega$ is generated within the core 1 and radiated into the glass cladding 2. This light is trapped within the cladding by total internal reflection and so is guided to the output of the device 3.

In the preferred embodiment MNA (2-methyl-4-nitroaniline) is chosen for the material of the core 1. MNA is a non-centrosymmetric crystal capable of being grown from the melt. The core may alternatively be formed of other materials of similar properties such as acetamide, benzil, 2-bromo-4-nitroaniline, 4-dimethylamino-3-acetamidonitrobenzine (DAN), formylnitrophenylhydrazine, m-dinitrobenzine (mDNB), m-nitroanaline (mNA), or N-(4-nitrophynl)-(L)-prolinol (NPP). Further alternatives are listed in, for example, British Patent No. 1331228.

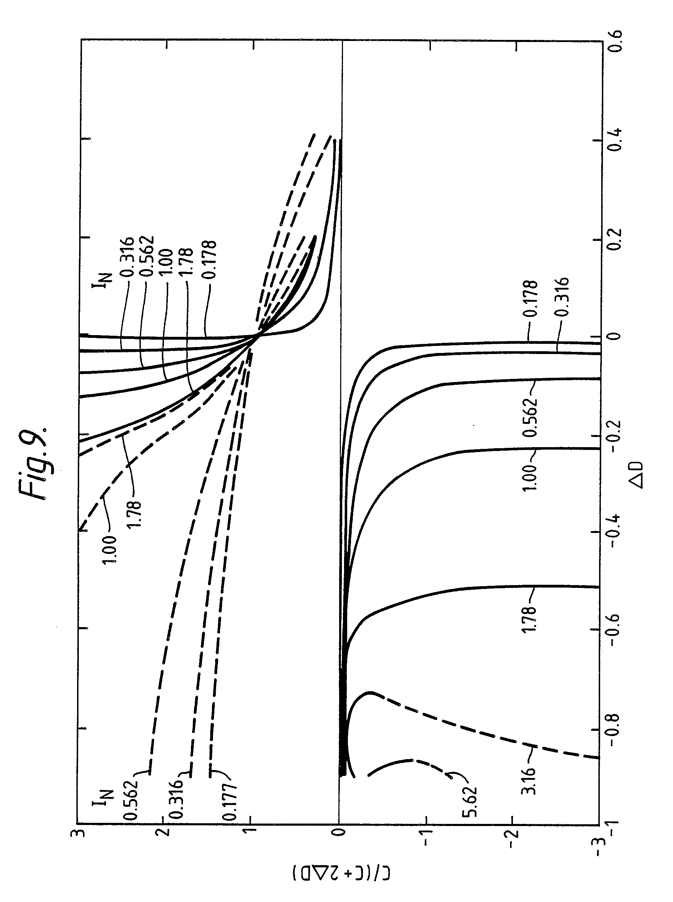

The clad 2 is formed from optical glass of the type commonly used in the construction of optical fibres and is chosen to have a refractive index less than that of the core 1. MNA has an optical second-harmonic coefficient d given by $d = 200\times10^{-12}$m/v. Choice of the design parameters of such a generator in accordance with the analysis outlined below enables a value for the overlap parameter $I_N$ as high as 1.0 to be achieved. Figure 9, discussed below, indicates a wide range of parameter space giving values of 1 or greater for $I_N$. Accordingly if the generator has an effective refractive index $n_e = 1.6$ its overall efficiency is such that a device length of only 29 mm is required to generate 1 mW at the second harmonic wavelength of 400 nm given an input of 10 mW from a laser operating at 800 nm. Still higher efficiencies can be achieved resulting in device lengths as short as 16 nm. Alternatively the improvement can be taken in the form of lower pump power or the enabling of the use of materials of lower SHG coefficient.

In order to identify the values of the design parameters necessary to achieve high efficiencies the coupling between the guided pump mode and the radiative second harmonic mode is treated theoretically as being analogous to the known phenomenon of scattering from guided modes to radiation modes by geometrical imperfections in fibres. In the case of second harmonic generation the coupling mechanism is not geometrical imperfections but results from the second order non-linear susceptibility tensor $\chi^{(2)}$. For guided mode SHG it is known that the efficiency is greatest when the pump and SH are in $LP_{01}$ modes. Consequently this analysis considers SH generated in $LP_{01}$ radiation mode from the $LP_{01}$ guided mode. For conversion efficiencies up to about 20% the effect of pump depletion can be neglected. The efficiency of SHG, $\eta$, is then given by

$$\eta = \frac{P^{(2\omega)}(L)}{P^{(\omega)}(0)} = \eta_m \times \left[\frac{\eta_e L}{\lambda(\omega)}\right] \times I_N^2 \qquad (1) \text{ where}$$

$$\eta_m = 8\pi \left[\frac{\mu 0}{\epsilon 0}\right]^{1/2} \cdot \frac{d^2 P^{(\omega)}(0)}{n_2^2(\omega)n_2(2\omega) \lambda^2(\omega)} \qquad (2)$$

and

$$I_N = 8W_1^2 \frac{\int_0^1 J_0(U_s x) J_0^2(U_1 x) \, x \, dx}{V_1^2 \quad J_1^2(U_1)W_s J_0(U_s)H_1^{(1)}(W_s) - U_s J_1(U_s)H_0^{(1)}(W_s)} \qquad (3)$$

Also, $d = \frac{1}{2}\chi^{(2)}$ is the appropriate SHG tensor coefficient, $P^{(\omega)}(0)$ is the initial pump power and $P^{(2\omega)}(L)$ is the SH output power for a device of length, L. The subscripts "$_l$" and "$_s$" refer to the long (pump : $\omega$ ) and short (SH : $2\omega$) wavelengths respectively. J and H denote Bessel and Hankel functions. Following standard notation for guided modes[6] $U_l, V_l$ and $W_l$ have their usual meanings, namely

$$U_l = a\,k(\omega)\,\sqrt{n_1^2(\omega) - n_e^2} \qquad (4)$$

$$V_l = a\,k(\omega)\,\sqrt{n_1^2(\omega) - n_2^2(\omega)} \qquad (5)$$

$$W_l = a\,k(\omega)\,\sqrt{n_e^2 - n_2^2(\omega)} \qquad (6)$$

$U_S$ and $V_S$ are similar to $U_l$ and $V_l$ with $\omega$ replaced by $2\omega$, but, as an exception, $W_S$ is given by

$$W_S = a\,k(2\omega)\,\sqrt{n_2^2(2\omega) - n_e^2} \qquad (7)$$

The refractive indices are denoted by n, with subscripts "$_1$" and "$_2$" identifying the core and clad regions respectively. The effective index seen by the mode is denoted by $n_e$, a is the core radius and $k(\omega) = 2\pi/\lambda(\omega)$.

The material contribution to the SHG efficiency is represented by $\eta_m$, equation (2), which is formally the SHG efficiency for a uniform plane wave in a bulk crystal whose length is equal to the beam radius. Although this is a small figure, the advantage of waveguide geometry is that the device length can be many orders of magnitude greater than the wavelength yielding useful overall efficiencies, as equation (1) shows. The normalised field overlap integral, $I_N$, equation (3), represents the waveguide contribution which arises from the spatial overlap of the transverse fields. As SHG is a degenerate three wave process, there are three J-Bessel functions in the numerator of this term.

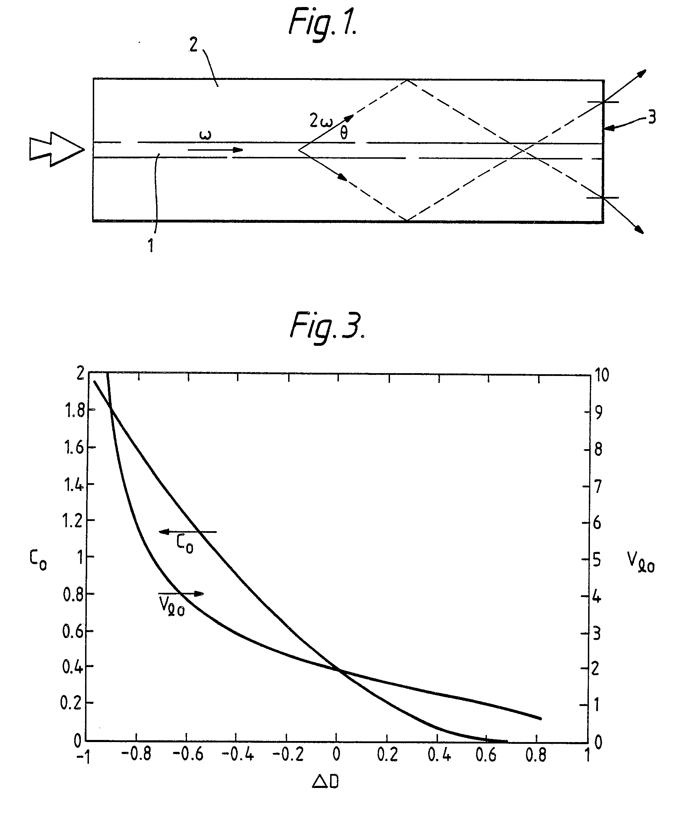

The propagation geometry for radiation SHG is shown schematically in figure 1. Phase matching (and hence efficient second harmonic generation) is achieved when the component of photon momentum along the fibre axis (z direction) is conserved, namely,

$$2\beta_z(\omega) = \beta_z(2\omega) \qquad (8)$$

This condition reveals that both the guided pump mode and the radiated SHG see the same effective refractive index, $n_e$

$$n_e = \beta_z(\omega)/k(\omega) = \beta_z(2\omega)/k(2\omega) = n_2(2\omega)\cos(\theta) \qquad (9)$$

Conservation of transverse momentum causes the SHG to radiate uniformly into a hollow cone whose semi-angle within the fibre is given by $\cos(\theta) = n_e/n_2(2\omega)$. There is a limit to the maximum refractive index, $n_s(2\omega)$, of any protective coating around the fibre since total internal reflection in the cladding is necessary if the fibre is to be its own collector of the SH. This is unlikely to be a significant restriction since efficient interactions involve low angle rays which have good overlap between fundamental and SH. The maximum coating index can be determined from the exit angle $\theta_{ex}$, by $n_3^2(2\omega) \leq [n_2^2(2\omega) - \sin^2(\theta_{ex})]$.

In a general three-wave interaction, there are ten parameters; the three wavelengths, the core and clad refractive indices at each wavelength and the core radius. The degeneracy of second harmonic generation coupled with the fact that waveguiding depends essentially on index differences rather than absolute indices, reduces this to five parameters; the three independent refractive indices, one independent wavelength and the core radius.

Discussion of the behaviour of $I_N$ is made tractable because, as we shall now show, it depends on only three independent parameters.

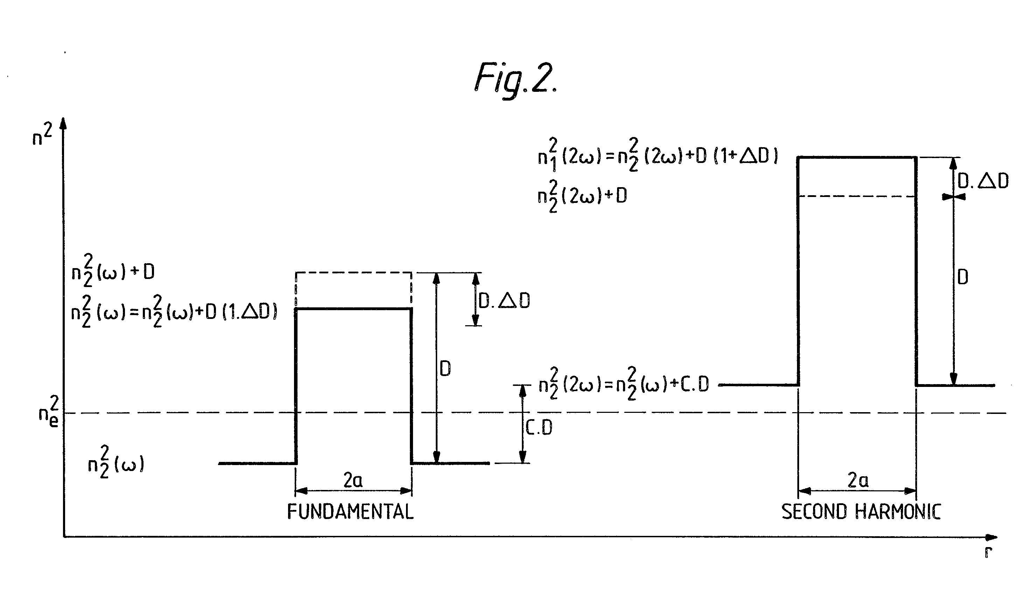

Figure 2 illustrates the refractive index profile at both wavelengths. The terms used here and later are defined as follows;

$$n_1^2(\omega) - n_2^2(\omega) = D_l = D(1 - \Delta D) \qquad (10)$$

$$n_1^2(2\omega) - n_2^2(2\omega) = D_S = D(1 + \Delta D) \qquad (11)$$

$$n_1^2(2\omega) - n_1^2(\omega) = D_c \qquad (12)$$

$$n_2^2(2\omega) - n_2^2(\omega) = D_g = C.D. \qquad (13)$$

$$D = \frac{1}{2}(D_S + D_l) \qquad (14)$$
$$\Delta D = \frac{1}{2}(D_S - D_l)/D \qquad (15)$$
$$D_g = D_c - 2D.\Delta D \qquad (16)$$

4

$$D_g = \frac{C(\Delta D)}{C(\Delta D) + 2\Delta D} \qquad (17)$$

$D_s$ and $D_l$ are related to the index differences at the long and short wavelengths. $D_c$ and $D_g$ are related to the dispersion of the clad glass, and the dispersion and birefringence of the crystal core.

Equations (10-13) are definitions which lead to equations (16-17). Combining equations (5-7) with (10-15) yields

$$V_s = 2V_l \left[\frac{1+\Delta D}{1-\Delta D}\right]^{1/2} \qquad (18)$$

$$W_s = 2V_l \left[\frac{C}{1-\Delta D} - \frac{W_l^2}{V_l^2}\right]^{1/2} \qquad (19)$$

From a numerical solution of the waveguide characteristic equation, $W_l$ is obtained as a unique function of $V_l$. Equations (18-19) show that $W_s$ and $V_s$ are related to $V_l$ through $C$ and $\Delta D$. $U_l$ is obtainable solely from $V_l$ and $W_l$, and similarly for $U_s$. Thus,

$$I_N(U_l, W_l, V_l, U_s, W_s) = I_N(V_l, C, \Delta D)$$

So, $I_N$ depends solely on a normalised frequency (the well known V-value, $V_l$), a normalised clad glass dispersion, $C$, and a normalised index-difference difference, $\Delta D$, defined by equations (10-15).

As the core index is always greater than the clad index, $D > 0$ and $-1 < \Delta D < +1$. Normal dispersion in the clad glass ensures that $C > 0$. The single crystal core will generally be more dispersive than the isotropic cladding glass, but it may also be birefringent. Thus the index difference may be smaller at the shorter wavelength leading to a negative value of $\Delta D$.

The profile at the guided pump wavelength determines $n_e$ which lies between the core and clad index at $\omega$. If radiation SHG is to occur, $n_e$ must lie below the clad index at the SH wavelength, figure (2). As there is a continuum of radiation modes, phase matching, equations (8,9), can be achieved without further constraining fibre design. As a result, there is a significant relaxation of fabrication tolerances in the radiation SHG case compared to that when both pump and SH are in discrete guided modes.

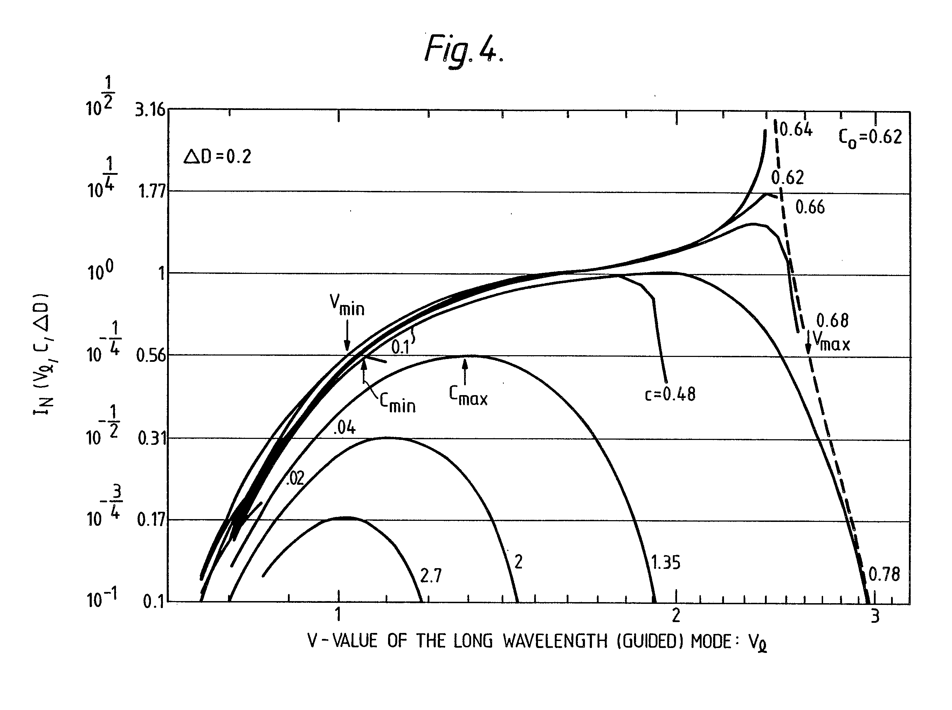

Inspection of equation (3) reveals that high efficiency is likely if the modulus term is small. Only $W_s$, $J_0(U_s)$ and $J_1(U_s)$ can be zero. As these two Bessel functions cannot both be zero for the same value of the argument, $U_s$, high SHG efficiency is expected in regions where $W_s$ is small and $U_s$ is near a zero of $J_1(U_s)$. Equations (7,9) show that a small $W_s$ implies a small angle of emission for the SH and hence good overlap between the interacting modes. Note that, when $W_s \to 0$, then $V_s \to U_s$. The first zero of $J_1(U_s)$ occurs for $U_s = 3.83$. Using $W_s = 0$ and $V_s = 3.83$ in equations (18-19) together with a numerical solution of the waveguide characteristic equation to give $W_l$ as a function of $V_l$, yields $C_0$ as a function of $\Delta D$, where $C_0$ is the value of $C$ giving maximum $I_N$. A good fit to the calculated data is obtained for $C_0 \approx (0.4 - \Delta D + 0.6\Delta D^2)$. Note that $0 \le C_0 \le 2$. $V_{lo}$ is likewise the value of $V_l$ at which $I_N$ is a maximum. These results are plotted in figure 3.

The aim of this analysis is to identify regions of the parameters $V_l$, $C$ and $\Delta D$ where efficient SH can be generated. To do this, it is convenient to determine the ranges of these parameters where a specific value of $I_N$ is exceeded. Equation (1) shows that $\eta$ depends on the square of $I_N$, so it is appropriate to select values of $I_N$ given by $10^{(0.25n)}$, where n is a positive or negative integer.

$I_N(V_l, C, \Delta D)$ as a function of $V_l$ was calculated for $-0.9 \le \Delta D \le 0.6$ and for a range of values of $C$. A typical result is shown in figure 4 for $\Delta D = -0.2$. In this case, for example, $I_N > 10^{0.25} = 0.562$ for $0.1 < C < 1.35$. The limits of $C$ are shown by $C_{min}$ and $C_{max}$ on figure 4. The range of $V_l$ over which $I_N$ exceeds 0.562 is not given by the values of $V_l$ where $I_N(C_{min})$ and $I_N(C_{max})$ reach $I_N = 0.562$. Instead, it is the wider range of values defined by the envelope of all the $I_N$ plots. The broken line shows the envelope obtained from additional results which are not explicitly plotted, and this gives $1.0 \le V_l \le 2.62$ with $V_{min}$ and $V_{max}$ also marked on the figure 4. There is clearly a narrow range of $C$ around $C = 0.64$ where $I_N$ is at its greatest. This is in close agreement with the value of 0.62 predicted theoretically for $C_0$ and presented on figure 3.

No particular significance can be given to the maximum value of $I_N$ displayed for $C \approx C_0$, as both $C$ and $V_I$ take discrete values in steps of 0.01 and 0.05 respectively in the calculations. Separate calculations show that values of $W_S$ and $U_S$ can indeed be found which drive the modulus in equation (3) ever closer to zero. This implies that $I_N \rightarrow \infty$ as $C \rightarrow C_0$. The tolerances on $C$ and $V_I$ necessary to access values of $I_N$ greater than those indicated, make their practical implementation unlikely.

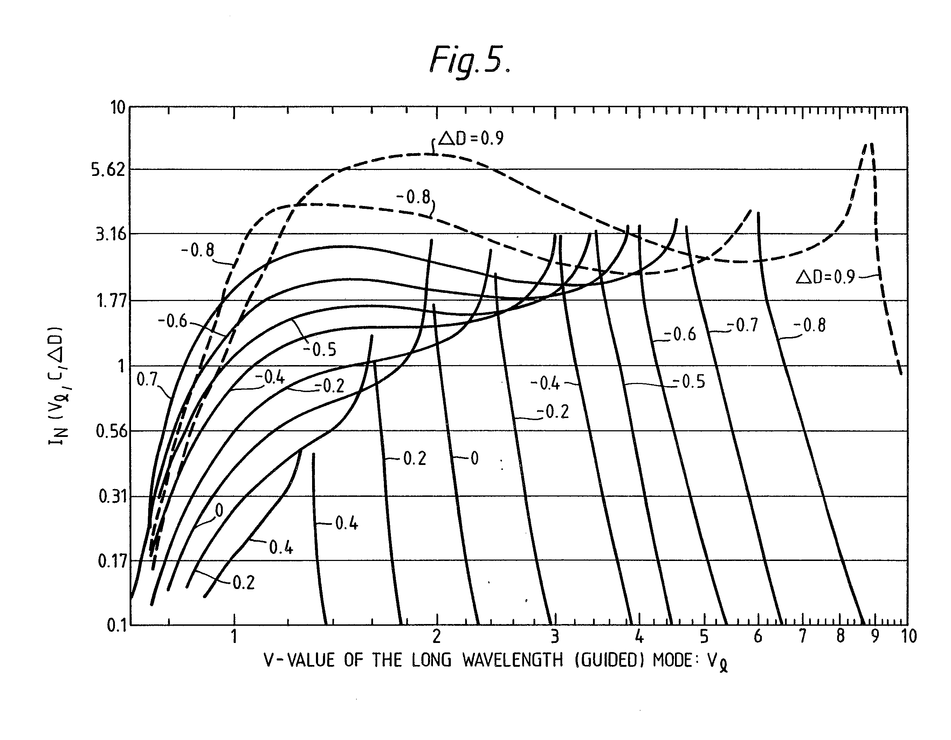

As an insight to the general trends in the results, the envelope of all the $I_N(C)$ results at each $\Delta D$ are presented in figure 5. As $V_I$ increases, the envelope is derived from increasing values of $C$. At large negative values of $\Delta D$ a shoulder appears on the short $V_I$ side of the $C_0$ peak. These can thus be a local minimum between these features, giving two regions where $I_N$ is greater than a specified value, as is clearly indicated for $\Delta_D$ = -0.8 and -0.9. These broad shoulders give a wide range of efficient design parameters having relaxed fabrication tolerances.

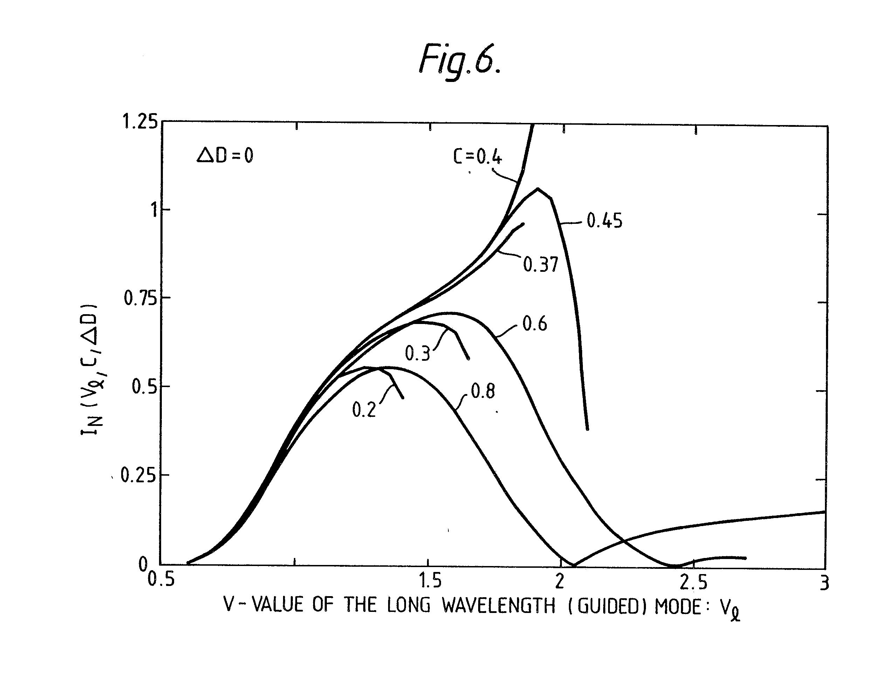

Figure 6 is similar to figure 4 except that the $I_N$ axis is linear rather than logarithmic, and $\Delta D$ = 0. The main feature to note is that there are values of $V_I$ for which $I_N$ = 0, and so no SH would be generated. These oscillations in $I_N$ result from interference between the SH originating from different parts of the core. As $V_I$ increases, $I_N$ oscillates through successive maxima and minima. Each successive maxima has a local maximum for a value of $C$ derived from the successive zeroes of $J_1(U_S)$. For designs capable of giving efficient SHG, the first maximum is the greatest.

Equation (19) shows that, since $W_S \geq 0$ and $W_I \leq V_I$, we require

$$\frac{W_1}{V_1} \leq \left[\frac{C}{1-\Delta D}\right]^{1}/2$$

This limits the maximum value of $V_I$ available when $C \leq (1-\Delta D)$ and explains the high $V_I$ termination of some plots in figures (4,6). When $C > 1-\Delta D$, $W_S$ cannot approach zero and so the efficiency cannot be enhanced by judicious choice of $C$ and tight fabrication tolerances. Although $V_I$ is now unbounded, no greater value of $I_N$ can be found than that around $C_0$.

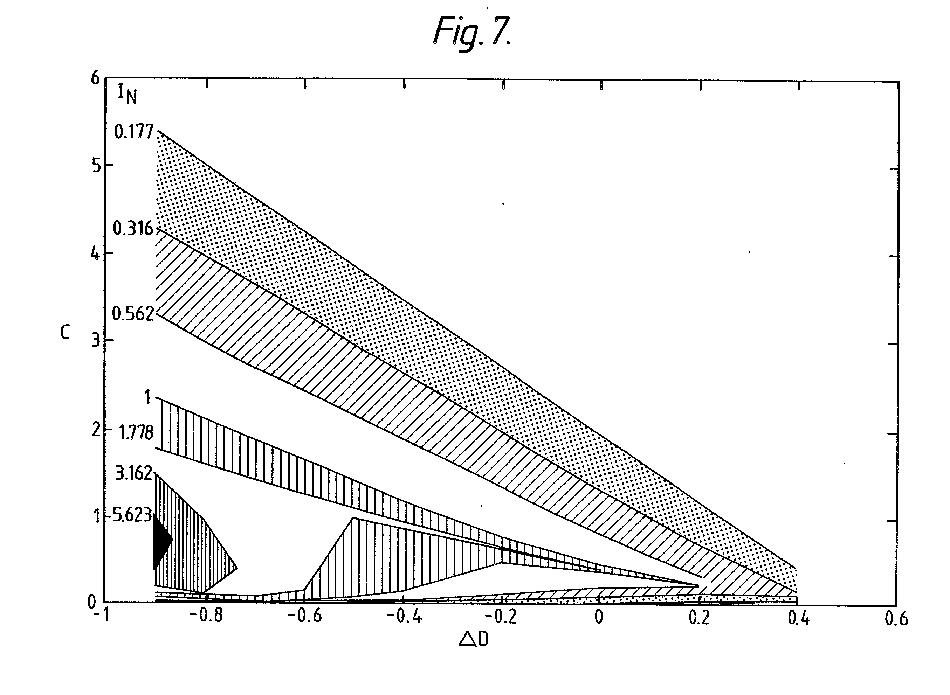

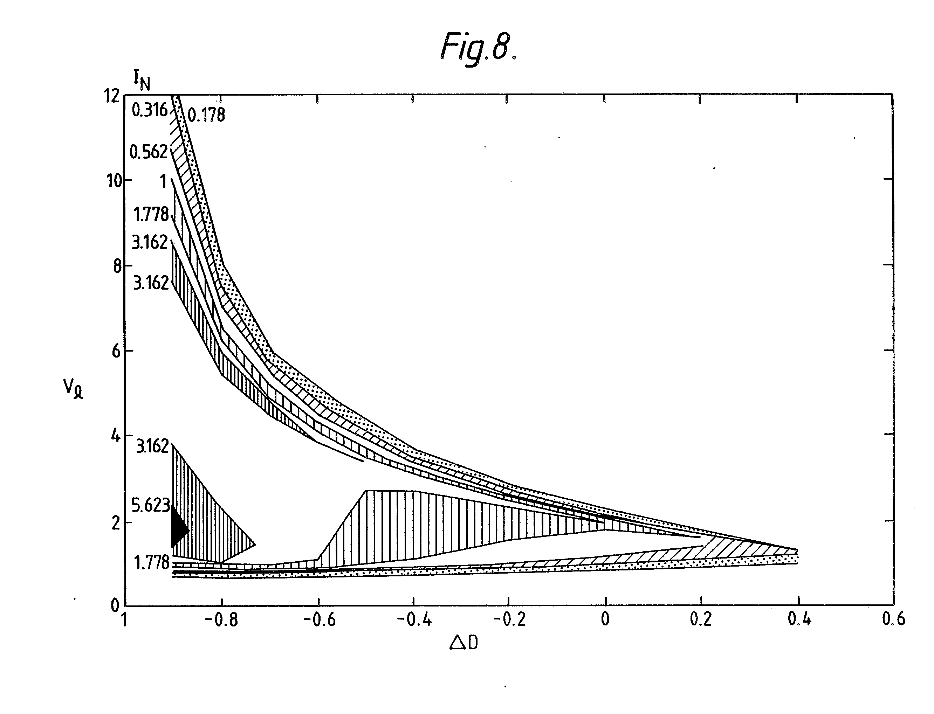

From a series of results for various values of $\Delta D$, (like those presented in figure 4 for $\Delta D$ = -0.2) the design regions of most interest can be obtained, and are presented in figures 7 and 8 as plots of $C$ and $V_I$ against $\Delta D$. Each band corresponds to a $10^{1/2}$ increase in SHG efficiency. Negative values of $\Delta D$ provide the higher values of SHG efficiency and do this over a wider range of the parameters $V_I$, $C$, $\Delta D$ than is the case for positive $\Delta D$. Since the wavelength is shorter at the SH than the fundamental, the lower index difference at the SH implied by negative $\Delta D$, acts to make $V_I$ and $V_S$ comparable. The resulting similarity in field shape between the SH and the fundamental leads to high efficiency. Negative $\Delta D$ requires a birefringent core material which will more than cancel the tendency of normal dispersion to increase the index difference at shorter wavelengths. As a consequence, the polarisations of the fundamental and SH will be orthogonal. If one axis of the principle dielectric tensor lies along the fibre axis, a SHG coefficient of the type $d_{iI}$ where $i \neq I$ will be employed.

The question posed by device design is as follows. Given the crystal refractive indices and wavelenghts of operation, which glasses have the refractive indices necessary to achieve a desired value of $I_N$, and what is the required core diameter; that is, the capillary bore?

The grouping of terms in equation (17) suggests that the data of figure (8) could usefully be re-plotted in the form of [ $C(\Delta D)$ / ( $C(\Delta D)$ + $2\Delta D$ )] against $\Delta D$, and this is done in figure (9).

As $D_g$ is always positive in transparent spectral regions, consideration of equations (13, 16, 17) reveals that there are three regions where solutions are possible.

1. $D_c > 0$, $\Delta D > 0$ and $C(\Delta D)/(C(\Delta D) + 2\Delta D) > 0$
Solutions lie between the $C_{min}$ and $C_{max}$ lines appropriate to the required value of $I_N$.

2. $D_c > 0$, $\Delta D < 0$ and $C(\Delta D)/(C(\Delta D) + 2\Delta D) > 0$
Solutions lie between the $C_{max}$ line and the lower of the $C_{min}$ line or infinity.

3. $D_c < 0$, $\Delta D < 0$ and $C(\Delta D)/(C(\Delta D) + 2\Delta D) < 0$
Solutions lie between the $C_{min}$ line and the lower of the $C_{max}$ line or minus infinity.

For a particular crystal, each of the wide range of commercially available glasses gives a point on a plot of $D_g/D_c$ against $\Delta D$. Equation (17) shows that this can be overlaid on figure (9) to identify those glasses giving the desired efficiency. As the core and clad indices at the fundamental are now defined for each of the selected glasses, the allowed range of $V_I$ presented in figure (7) leads directly, through equation (5), to a range for the ratio $a/\lambda(\omega)$. Fabrication considerations are likely to suggest that the larger bore diameters are preferable.

In the visible and near-IR, $D_g = n_2^2(2\omega) - n_2^2(\omega)$ is generally in the range $0.02 \rightarrow 0.4$, with higher values being appropriate to shorter wavelength regions and higher index glasses. The range available around a particular refractive index is somewhat smaller. It would be fortuitous (though not impossible) for the additional dispersion of the crystal core over and above that of the clad to be balanced by birefringence. Thus, in general, $|D_c| > D_g$. Large positive values of $D_c > D_g$ giving $D_g / D_c \rightarrow 0$ from above can only be obtained for $\Delta D > 0$ and do not yield the highest efficiencies. Large negative values of $D_c$, $(-D_c > D_g)$ giving $D_g / D_c \rightarrow 0$ from below can be accommodated for a wide range of efficiencies, $D_c$ and $\Delta D < 0$. Thus the aim is to identify crystals which present a large off-diagonal SHG tensor coefficient and select that cladding glass which satisfies the waveguide requirements.

## Claims

1. An optical second harmonic generator arranged to couple light from a fundamental guided mode into a second harmonic radiation mode having an overlap parameter $I_N$ greater than 0.1

2. An optical second harmonic generator according to claim 1, having its overlap parameter $I_N$ greater than 0.3.

3. An optical second harmonic generator according to claim 2 having its overlap parameter $I_N$ greater than 1.

4. An optical second harmonic generator according to claim 3, having its overlap parameter $I_N$ greater than 3.

5. An optical second harmonic generator according to any one of the preceding claims, comprising a core of a non-linear organic crystalline material surrounded by a glass cladding.

6. An optical second harmonic generator according to claim 5, in which the core is made from a non-centrosymmetric crystal glass.

7. An optical second harmonic generator according to claim 6, in which the non-centrosymmetric crystal glass is acetamide or benzil or 2-bromo-4-nitroaniline or 4-dimethylamino-3-acetamidonitrobenzine (DAN) or formyl-nitrophenylhydrazine or m-dinitrobenzine (mDNB) or m-nitroanaline (mNA) or 2-methyl-4-nitroaniline (MNA) or N-(4-nitrophynl)-(L)-prolinol (NPP).

8. An optical source comprising an optical second harmonic generator in accordance with any one of the preceding claims optically coupled to a semiconductor laser so that the frequency of the output from the laser is doubled.

## Fig.1.

## Fig.3.

Fig.2.

Fig. 4.

EP 0 299 647 A1

Fig.5.

EP 0 299 647 A1

Fig.6.

EP 0 299 647 A1

EP 0 299 647 A1

## Fig.7.

Fig.8.

EP 0 299 647 A1

# Fig.9.

EP 0 299 647 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | PROCEEDINGS CLEO '86, San Francisco, 11th June 1986, WK46; K.I. WHITE et al.: "Nonlinear fiber waveguides: the field overlap"<br>* Whole article * | 1 | G 02 F    1/37 |
| A | JEE, vol. 23, no. 239, November 1986, pages 93-95, Tokyo, JP; T. TANIUCHI: "SHG device cuts laser beam wavelength in half"<br>* Page 94, column 1, lines 20-23; figure 1 * | 1 | |
| A | SOV. J. QUANTUM ELECTRON., vol. 13, no. 8, August 1983, pages 1072-1075, American Institute of Physics; K.S. BURITSKII et al.: "Optimization of the parameters of LiNbO3:Ti channel waveguides for second harmonic generation"<br>* Page 1074, column 1, lines 4-9 * | 1 | |
| | | | **TECHNICAL FIELDS SEARCHED (Int. Cl.4)** |
| D,A | GB-A-1 331 228   (THE POST OFFICE)<br>* Claims * | 1,6-8 | G 02 F |
| A | ELECTRONICS AND COMMUNICATIONS IN JAPAN, vol. 68, no. 5, September/October 1985, pages 1-7, part 2, Scripta Technica, Inc.; K. SASAKI et al.: "SHG in a slab-type waveguide with a 2-methyl-4-nitroaniline crystal as a high index top layer"<br>* Figure 3 * | 1,6-8 | |
| A | US-A-3 624 406   (R.J. MARTIN et al.)<br>* Abstract; column 7, lines 22-29; figures 2A,2B * | 1 | |
| | -/- | | |

The present search report has been drawn up for all claims

| Place of search | Date of completion of the search | Examiner |
|---|---|---|
| THE HAGUE | 28-09-1988 | GALANTI M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................
& : member of the same patent family, corresponding
    document

EPO FORM 1503 03.82 (P0401)

EP  88 30 5932

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | LASER FOCUS, vol. 23, no. 6, June 1987, pages 50-55; B. DANCE: "Second-harmonic generation in single crystals" * Whole article * | 1,6,7 | |

TECHNICAL FIELDS
SEARCHED (Int. Cl.4)

The present search report has been drawn up for all claims

| Place of search | Date of completion of the search | Examiner |
|---|---|---|
| THE HAGUE | 28-09-1988 | GALANTI M. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)